# FASCICULE DE BREVET EUROPEEN

(11) **EP 1 144 745 B1**
(45) Date de publication et mention de la délivrance du brevet: **26.12.2007**
(21) Numéro de dépôt: 99934808.9
(22) Date de dépôt: 29.07.1999
(51) Int. Cl.: D04H 13/00

(54) **PROCEDE DE FABRICATION D'UN MAT ET PRODUITS OBTENUS**
VERFAHREN ZUR HERSTELLUNG EINER MATTE SOWIE DARAUS HERGESTELLTE GEGENSTÄNDE
METHOD FOR MAKING A MAT AND RESULTING PRODUCTS

(30) Priorité: 03.08.1998 FR 9809894
(43) Date de publication de la demande: 17.10.2001
(73) Titulaire: Saint-Gobain Vetrotex France, 73000 Chambéry (FR)
(72) Inventeur: DROUX, Michel, F-73490 La Ravoire (FR)
(74) Mandataire: Goldenberg, Virginie Isabelle
(86) Numéro de dépôt international: PCT/FR1999/001874
(87) Numéro de publication internationale: WO 2000/008246

(56) Documents cités:
- WO-A-97/21861
- US-A- 3 745 060
- US-A- 3 936 558
- US-A- 4 404 717
- US-A- 4 692 375
- US-A- 5 565 049
- PATENT ABSTRACTS OF JAPAN vol. 017, no. 664 (M-1523), 8 décembre 1993 (1993-12-08) & JP 05 220855 A (ASAHI FIBER GLASS CO LTD), 31 août 1993 (1993-08-31) & JP 05 220855 A (ASAHI FIBER GLASS CO LTD) 31 août 1993 (1993-08-31)

## Description

La présente invention concerne un procédé de fabrication de mats améliorés pour la réalisation, notamment, de produits composites et/ou de produits moulés, en particulier un procédé de fabrication de mats de fils de verre continus améliorés pour la réalisation de produits composites par des procédés de moulage par injection, et concerne un dispositif permettant d'obtenir de tels mats ainsi que les mats obtenus.

Les produits connus sous le nom de " mats " sont essentiellement des produits utilisés dans l'industrie des renforts et comprennent le plus souvent des fils de verre formés de filaments. On distingue généralement deux types de mats : les mats de fils coupés et les mats de fils continus. Les mats de fils de verre continus sont des produits bien connus dans l'industrie des renforts et sont généralement utilisés pour réaliser des produits composites par moulage, en particulier par moulage par compression ou par moulage par injection. Ils sont habituellement obtenus en distribuant et en superposant en continu des couches de fils continus sur un convoyeur, chaque couche étant obtenue à partir d'une filière en étirant des filets de verre sous la forme de filaments continus, puis en rassemblant les filaments en fils et en projetant ces fils sur le convoyeur (avec un mouvement de battement ou va-et-vient pour que les fils balayent tout ou partie de la largeur du convoyeur) se déplaçant transversalement à la direction des fils projetés, la cohésion des fils au sein du mat étant généralement assurée par un liant déposé sur les fils puis traité en étuve.

Selon les applications envisagées, on recherche des propriétés plus ou moins différentes dans les mats de fils de verre continus ; par exemple, lorsque ces mats sont destinés à la réalisation de composites par pultrusion ou sont destinés à des applications électriques ou pour l'isolation, il est souhaitable d'utiliser des mats plats, constitués de fils fortement liés les uns aux autres et n'offrant que de petits interstices entre les fils, et lorsque ces mats sont destinés à la réalisation de composites par injection, il est souhaitable d'utiliser des mats suffisamment aérés (ou poreux) et en particulier présentant ou conservant suffisamment de gonflant pour un poids de fils donné.

Il est connu d'améliorer l'aspect de surface des composites obtenus à partir des mats de fils de verre continus en revêtant ces derniers de voiles de filaments de verre maintenus par un liant. Une telle opération présente cependant des inconvénients ; outre le fait qu'elle peut ralentir la productivité et augmenter le coût de fabrication des mats, elle pose généralement des problèmes de compatibilité ou de solidarisation des voiles et des mats. Traiter le mat pour améliorer son aspect de surface peut également entraîner des problèmes de perte partielle ou totale de certaines propriétés des mats (telles que le gonflant, les propriétés mécaniques...). Il n'existe ainsi pas à l'heure actuelle de procédé permettant d'obtenir, avec une bonne productivité, des mats à la fois suffisamment gonflants et poreux pour pouvoir être utilisés de façon satisfaisante dans la fabrication de composites par des procédés de moulage par injection, et permettant en même temps la réalisation de composites présentant un aspect de surface particulièrement satisfaisant.

La présente invention a pour but de fournir des mats améliorés, en particulier des mats de fils continus (comprenant de préférence des fils de verre) permettant notamment la réalisation de composites et/ou de produits moulés présentant un aspect de surface particulièrement satisfaisant et pouvant être utilisés de façon satisfaisante dans la fabrication de composites et/ou de produits moulés par des procédés de moulage par injection, et a pour but de fournir un procédé avantageux de réalisation de ces mats.

Ce but est atteint grâce au procédé de fabrication d'un mat selon l'invention selon lequel on dépose sur au moins un convoyeur en mouvement au moins une première couche ou série de couches de fil(s) formé(s) de filaments et au moins une deuxième couche ou série de couches de fil(s) formé(s) de filaments, caractérisé en ce que l'on ouvre au moins une partie du(des) fil(s) de la première couche ou série de couches avant superposition de la première couche ou série de couches et de la deuxième couche ou série de couches.

De préférence, il s'agit d'un mat de fils continus, les couches de fil(s) précédemment mentionnées étant des couches de fil(s) continu(s).

La présente invention concerne également un dispositif de mise en oeuvre du procédé, ce dispositif comprenant au moins :
- un premier dispositif ou ensemble de dispositifs d'alimentation d'une première couche ou série de couches de fil(s) formé(s) de filaments,
- un deuxième dispositif ou ensemble de dispositifs d'alimentation d'une deuxième couche ou série de couches de fil(s) formé(s) de filaments,
- au moins un convoyeur destiné à recevoir la première couche ou série de couches et la deuxième couche ou série de couches de fil(s),
- et au moins un dispositif d'ouverture de fils situé en aval du premier dispositif ou ensemble de dispositifs d'alimentation et en amont de l'endroit du convoyeur où se superposent la première couche ou série de couches et la deuxième couche ou série de couches.

La présente invention concerne également un mat de fils amélioré, de préférence un mat de fils continus, ce mat comprenant une ou plusieurs couche(s) de fil(s) intègre(s) et une ou plusieurs couche(s) de fil(s) ouvert(s) au moins en partie sous forme de filaments, ce mat étant obtenu ou étant susceptible d'être obtenu selon le procédé de l'invention. En particulier, la présente invention concerne un mat, de préférence un mat de fils continus, comprenant une ou plusieurs couche(s) de fil(s) intègre(s) et une ou plusieurs couche(s) de fil(s) ouvert(s) au moins en partie sous forme de filaments, cette dernière couche ou ces dernières couches présentant un gradient de dispersion des filaments.

Le procédé et les mats selon l'invention présentent de nombreux avantages par rapport aux procédés et mats traditionnels, avantages qui seront mis en évidence au cours de la description suivante.

Dans le procédé selon l'invention tel que précédemment défini, on forme un mat comprenant plusieurs couches de fil(s) formé(s) de filaments en déposant en continu plusieurs couches de fil(s) formé(s) de filaments sur au moins un convoyeur en mouvement (les couches se superposant les unes aux autres) et en ouvrant au moins en partie le(s) fil(s) d'une ou plusieurs couches de fil(s) avant superposition avec une ou plusieurs autres couches de fil(s). Plus précisément, on dépose sur au moins un convoyeur en mouvement au moins une première couche ou série de couches de fil(s) formé(s) de filaments et au moins une deuxième couche ou série de couches de fil(s) formé(s) de filaments (" première " et " deuxième " ne définissant pas un ordre chronologique dans la présente invention mais permettant de différencier les couches ; la première couche peut ainsi être déposée dans le temps après la deuxième couche), les couches se superposant (en fait chaque couche déposée sur un convoyeur se superposant à la ou aux couches précédemment déposée(s) sur ce même convoyeur) et, avant superposition de la première couche ou série de couches et de la deuxième couche ou série de couches, on ouvre au moins une partie du(des) fil(s) de la première couche ou série de couches et on disperse au moins en partie les filaments le(s) constituant.

Il est très important dans la présente invention que l'ouverture des fils se fasse sur une partie des couches déposées avant superposition avec l'autre partie des couches (et non par exemple sur l'ensemble des couches déposées), ceci permettant l'obtention de plusieurs avantages ; en particulier, dans le cas de la fabrication d'un mat de fils continus, ceci permet d'obtenir à la fois l'aspect de surface et le gonflant du mat recherchés.

De façon plus générale, cette façon de procéder favorise également l'obtention de mats présentant une meilleure cohésion dans toute leur épaisseur et nécessitant moins de liant pour leur cohésion, comme il apparaîtra ultérieurement dans la description.

Chaque couche déposée sur le convoyeur comprend un ou plusieurs fils, et de préférence comprend plusieurs fils (généralement entre une et quelques dizaines de fils). Chaque fil utilisé pour former le mat comprend plusieurs filaments (par exemple de l'ordre de 10 à 150 filaments), ces filaments présentant généralement un diamètre de quelques microns à quelques dizaines de microns (par exemple de l'ordre de 5 à 24 microns dans le cas des filaments de verre). Les filaments sont le cas échéant initialement maintenus solidaires au sein du fil grâce à un ensimage approprié déposé (de façon connue) sur les filaments lors de la fabrication des fils (généralement après formation des filaments et avant leur rassemblement en fil(s). Les fils présentent généralement chacun une masse linéique allant de 2 g/km à 100 g/km.

Chaque fil est formé dans la plupart des cas de filaments d'une seule matière mais peut éventuellement être formé d'un mélange de filaments de différentes matières (fil composite). Les caractéristiques (diamètre, masse linéique...) initiales (c'est-à-dire avant dépôt sur le convoyeur et éclatement de certains fils) ou la constitution des fils utilisés peuvent être différentes d'une couche à une autre tandis que les fils au sein d'une même couche sont généralement similaires et formés de la ou des mêmes matières. Les fils sont de préférence formés (de filaments) d'une ou plusieurs matières choisies parmi les matières thermoplastiques et/ou de renfort, par exemple choisies parmi les matières organiques thermoplastiques, telles que le polyéthylène téréphtalate ou un polymère acrylique, et les matières de renfort telles que le verre. De préférence, les mats selon l'invention sont formés au moins en partie de fils de renfort (c'est à dire renfermant des filaments d'une matière de renfort au moins), avantageusement de fils de verre, ces fils étant formés de filaments de verre uniquement (cas le plus fréquent) ou étant éventuellement formés de filaments de verre mélangés à des filaments de matière organique (fils composites). De façon particulièrement préférée, les fils formant les mats selon l'invention sont essentiellement (à plus de 20 % en poids, de préférence à plus de 50 % en poids des fils), voire uniquement, des fils de verre et/ou les mats comprennent, comme couche(s) de fil(s) intègre(s), une (des) couche(s) de fil(s) de verre et, comme couche(s) de fil(s) ouvert(s), une (des) couche(s) de fil(s) de matière organique thermoplastique (telle que par exemple le polyéthylène téréphtalate ou un polymère acrylique).

Les fils de verre utilisés le cas échéant pour former le mat selon l'invention sont généralement des fils de verre E, ces fils étant les fils les plus couramment utilisés dans le domaine du renforcement. D'autres types de fils de verre peuvent être également utilisés pour la formation du mat, tels que des fils de verre A, en particulier pour la formation de la première couche ou série de couches (couche(s) de fil(s) ouvert(s) selon l'invention. De préférence, la deuxième couche ou série de couches de fil(s) (couche(s) de fil(s) intègres) est formée de fil(s) de verre E, et dans la plupart des cas selon l'invention, le mat comprend comme fils uniquement des fils de verre E.

De préférence, le procédé selon l'invention est un procédé direct dans lequel on forme des filaments à partir de dispositifs d'alimentation, tels que par exemple des filières et/ou des dispositifs d'extrusion, puis l'on regroupe les filaments en fil(s) que l'on distribue à l'aide de dispositifs de projection sur au moins un convoyeur en mouvement afin de former les couches de fil(s) selon l'invention, chaque ensemble de fil(s) projeté à partir d'un dispositif de projection formant une couche de fil(s).

Par exemple, selon un mode de réalisation préféré de l'invention, le ou les fils de chaque couche du mat sont obtenus à partir d'au moins une filière en étirant une multiplicité de filets de verre fondu, s'écoulant d'une multiplicité d'orifices disposés à la base de la filière sous la forme d'une ou plusieurs nappes de filaments continus puis en rassemblant les filaments sous la forme du ou des fils. Dans ce mode de réalisation de l'invention, l'étirage et l'entraînement des fils de chaque couche se fait par l'intermédiaire d'un système d'étirage ou " roue d'étirage " en rotation autour d'un axe fixe et muni d'un organe de projection ou " roue à ailettes " animé d'un mouvement de battement par rapport à cet axe, cet organe de projection assurant la projection et la répartition des fils sur le convoyeur se déplaçant transversalement par rapport à la direction des fils projetés.

Dans un mode de réalisation de l'invention, le ou les fils d'au moins une couche peuvent également être obtenus en extrudant et entraînant une matière organique thermoplastique en même temps que l'on étire des filets de verre sous forme de filaments, les trajets suivis par les filaments de verre et les filaments organiques thermoplastiques convergeant l'un vers l'autre avant que lesdits filaments soient rassemblés en un ou plusieurs fils composites que l'on entraîne par le système d'étirage mentionné précédemment. Ce mode de réalisation de l'invention permet d'obtenir un mat présentant au moins une couche de fils composites.

Dans un autre mode de réalisation avantageux, le ou les fils de la deuxième couche ou série de couches du mat sont obtenus à partir de filière(s) comme précédemment décrit et le ou les fils de la première couche du mat sont obtenus en extrudant et entraînant à partir de dispositif(s) d'extrusion une matière organique thermoplastique sous forme de filaments que l'on regroupe en le ou lesdits fils.

De préférence selon l'invention, en particulier lorsque les dispositifs d'alimentation ont tous des débits proches ou identiques, la première couche ou série de couches provient de un à quatre dispositifs d'alimentation, par exemple de une à quatre filières ou de un à quatre dispositifs d'extrusion, la deuxième couche ou série de couches provenant généralement d'un nombre de dispositifs d'alimentation beaucoup plus élevé (de façon par exemple à ce que la première couche ou série de couches forme seulement de l'ordre de 5 à 20 % en poids du mat obtenu, ce mat présentant ainsi à la fois un bon aspect de surface, de bonnes propriétés mécaniques, et le gonflant recherché dans le cas des fils continus).

L'ouverture des fils se fait généralement selon l'invention par un ou des moyens mécaniques (ou en partie mécaniques) agissant sur les fils de la première couche ou série de couches disposés sur le convoyeur. De préférence, les fils sont ouverts mécaniquement sous l'action d'une cascade et/ou de jets de fluide (par exemple une cascade ou des jets d'eau ou une cascade ou des jets de liant liquide comme mentionné ultérieurement) arrivant transversalement sur le(s) fil(s) de la première couche ou série de couches disposés sur le convoyeur. Les fils, dans le cas des fils continus, sont préférentiellement ouverts sous l'action d'une cascade de liquide se déversant sur le(s) fil(s) de la première couche ou série de couches disposés sur le convoyeur, l'utilisation de jets étant par contre préférée dans le cas des fils coupés.

Selon l'invention, le ou les fils de la première couche ou série de couches sont ouverts au moins en partie, c'est-à-dire que les filaments constituant le(s) fil(s) ou les filaments d'au moins une partie des fils sont disjoints sur une ou plusieurs portions du (des) fil(s) et occupent (ou se répandent sur) une surface (ou section) plus importante que celle initialement occupée par le fil (par exemple une section de l'ordre de quelques millimètres alors que le fil présente initialement une section inférieure au millimètre), ces filaments restant le plus souvent encore jointifs (ou le fil conservant approximativement sa section initiale) en d'autres endroits du (des) fil(s).

Selon le type de dispositif d'ouverture employé, ce dispositif peut également disperser les filaments plus ou moins fortement. Dans le mode de réalisation de l'invention utilisant une cascade ou des jets de liquide, cette cascade ou ces jets peuvent ainsi être réglés (au niveau par exemple de leur débit) pour permettre à la fois d'ouvrir le(s) fil(s) et favoriser la dispersion des filaments le(s) constituant. Par exemple, dans le cas notamment des fils continus, l'utilisation d'une cascade présentant un débit de l'ordre de 1 à quelques mètres cube par heure par mètre de largeur de cascade, pour un convoyeur progressant à des vitesses de l'ordre de quelques mètres à quelques dizaines de mètres par minute, permet une bonne ouverture des fils et une bonne dispersion des filaments. On peut également prévoir l'utilisation d'un dispositif de dispersion supplémentaire distinct du ou des dispositifs d'ouverture du (des) fil(s) ; par exemple, le ou les fils de la première couche ou série de couches, pendant ou après leur ouverture, peuvent passer dans un bain favorisant la dispersion des filaments les constituant. Ce bain peut être par exemple constitué par l'excédent de liquide tombant de la cascade ou des jets et non retenu par les couches de fil(s) ou peut être indépendant de la cascade ou des jets. Il peut être contenu sur une portion de convoyeur (dans le cas notamment où celui-ci se présente sous forme d'une bande de tissu non étanche), en aval notamment du ou des dispositifs d'ouverture, par l'intermédiaire d'une plaque placée sous le convoyeur et, éventuellement par l'intermédiaire de parois latérales bordant le convoyeur. La présence de la plaque inférieure contenant le bain peut permettre le cas échéant une meilleure ouverture des fils et dispersion des filaments.

La couche ou première série de couches obtenue après ouverture du (des) fil(s) et dispersion des filaments présente généralement un gradient de dispersion des filaments, l'action des dispositifs d'ouverture de type cascade ou jets s'exerçant principalement à la surface de la ou des couches recevant la cascade ou les jets puis s'exerçant de façon décroissante jusqu'à la surface opposée, généralement celle au contact du convoyeur, de la ou des couches. En d'autres termes, la dispersion des filaments constituant le(s) fil(s) de la première couche ou série de couches diminue (les filaments s'étalent sur une surface de moins en moins importante et/ou les fils sont ouverts sur une longueur de moins en moins importante par rapport à la longueur totale de fils) au fur et à mesure que l'on s'éloigne de la face (de la ou des couches) ayant reçu la cascade ou les jets.

Selon l'invention, le ou les fils de la première couche ou série de couches sont ouverts alors qu'ils se trouvent sur un convoyeur puis se superposent avec le(s) fil(s) de la deuxième couche ou série de couches, c'est-à-dire qu'ils peuvent venir recouvrir le(s) fil(s) de la deuxième couche ou série de couches ou être recouverts par le(s) fil(s) de la deuxième couche ou série de couches (en règle générale et de préférence, ils sont recouverts par le(s) fil(s) de la deuxième couche ou série de couches et se trouvent au contact du convoyeur).

Les fils des différentes couches peuvent être déposés successivement sur un même convoyeur ou sur plusieurs convoyeurs, la superposition finale de toutes les couches s'opérant sur un convoyeur sur lequel arrivent (et sont alors déposées) toutes les couches (certaines couches provenant éventuellement d'autres convoyeurs sur lesquels elles ont été initialement déposées). En particulier, le ou les fils de la première couche ou série de couches peuvent être ouverts sur un premier convoyeur puis être introduits sur un second convoyeur avant de recouvrir ou d'être recouverts sur ce second convoyeur par le(s) fil(s) de la deuxième couche ou série de couches. Ce mode de réalisation présente notamment l'avantage de permettre l'utilisation, pour chaque couche ou série de couches, de convoyeurs appropriés selon les traitements subis par ces couches.

Selon un mode de réalisation avantageux de la présente invention, le ou les fils de la première couche ou série de couches sont positionnés ou repositionnés sur le convoyeur avant de recouvrir ou d'être recouverts par le(s) fil(s) de la deuxième couche ou série de couches de façon à ce que la dispersion la plus importante des filaments s'observe sur une face extérieure de la structure fibreuse (ou du mat) ainsi formée. Par exemple, le ou les fils de la première couche ou série de couches sont déposés puis ouverts par une cascade ou des jets de fluide sur un premier convoyeur puis viennent recouvrir le(s) fils de la deuxième couche ou série de couches sur un second convoyeur de façon à ce que le(s) fil(s) le(s) plus ouvert(s) se trouve(nt) en face supérieure de la structure fibreuse obtenue, ou bien le ou les fils de la première couche ou série de couches sont déposés puis ouverts par une cascade ou des jets de fluide sur un premier convoyeur puis sont introduits sur un second convoyeur en retournant la couche ou série de couches de façon à ce que les fils en face supérieure de la couche ou série de couches se retrouvent en face inférieure et vice-versa, avant recouvrement de la couche ou série de couches par le(s) fil(s) de la deuxième couche ou série de couches de façon à ce que le(s) fil(s) le(s) plus ouvert(s) se trouve(nt) en face inférieure de la structure fibreuse obtenue. Ces modes de réalisation permettent d'améliorer encore l'aspect de surface (en au moins une face) des produits obtenus.

De préférence, dans le procédé selon l'invention, on prévoit également d'enduire les couches de fils d'au moins un liant assurant, après un traitement approprié, par exemple après sa fusion et/ou sa polymérisation et/ou sa réticulation, la cohésion des fils et filaments constituant le mat. De préférence, on utilise au moins un liant sous forme liquide et de façon particulièrement préférée, on utilise également au moins un liant sous forme de poudre en complément du liant liquide, ces deux liants ou ces deux parties de liant étant avantageusement déposés séparément.

Le liant liquide est préférentiellement déposé (déversé, pulvérisé) sur la première couche ou série de couches de fils après ouverture des fils et/ou dispersion des filaments les constituant ou simultanément à l'ouverture et/ou à la dispersion, et avant superposition avec la deuxième couche ou série de couches, et permet de prélier les fils de la première couche ou série de couches. Dans le mode de réalisation de l'invention utilisant une cascade ou des jets de liquide comme dispositif d'ouverture des fils, ce liant correspond préférentiellement au liquide déversé par la cascade ou les jets de liquide (ou est présent dans ce liquide). Le liant sous forme de poudre est préférentiellement déversé sur la deuxième couche ou série de couches après superposition des différentes couches. La ou les couches préliées par le liant liquide sont préférentiellement mises en face inférieure du mat formé sur le convoyeur pour pallier éventuellement à l'insuffisance de liant poudre atteignant la première couche ou série de couches ou pour retenir la poudre liante dans le mat et permettre ainsi de lier le mat dans toute son épaisseur en utilisant des quantités minimales de liant liquide et de liant poudre. L'utilisation de faibles quantités de liant, en particulier de poudre, permet également d'éviter la formation d'amas de liant ou de poudre pouvant nuire à l'aspect de surface du produit obtenu. Le mat ainsi obtenu présente un liage suffisant, et non excessif ou important, dans toute son épaisseur et sur ses deux faces, en réalisant une économie de liant.

L'utilisation combinée d'un liant liquide et d'un liant sous forme de poudre, telle que décrite précédemment, dans le procédé selon l'invention présente ainsi plusieurs avantages : elle permet notamment d'obtenir une répartition particulièrement homogène du liant au sein du mat, en particulier sur toute son épaisseur, en utilisant de faibles quantités de liant, contrairement à l'utilisation d'un liant seulement sous forme de poudre, éventuellement en dispersion dans un liquide non collant, ou seulement sous forme d'une solution, ces derniers liants se répartissant en effet de façon plus sélective dans le mat, étant utilisés en plus fortes quantités pour obtenir un collage dans l'épaisseur du mat et entraînant des collages trop importants des fils en certains endroits du mat.

Le liant (ou la partie du liant) sous forme liquide est sous forme d'une solution ou émulsion ou suspension et comprend généralement un solvant ou (dans le cas d'une émulsion ou suspension) un médium ou véhicule, par exemple de l'eau, un agent collant sous forme de polymère(s), par exemple un acétate de polyvinyle ou une résine acrylique ou polyester, un agent de couplage, par exemple un silane, et un agent dispersant, par exemple un tensioactif non ionique ou cationique. Le liant (ou la partie du liant) sous forme de poudre se présente généralement sous forme de polymère(s) thermoplastique(s) ou thermodurcissable(s), par exemple sous forme de polyester(s) insaturé(s).

Le taux de matières " sèches " provenant du liant liquide (c'est-à-dire restant après évaporation du solvant ou médium) que l'on cherche à déposer le cas échéant sur la première couche ou série de couches représente préférentiellement de 0 à 5 % en poids du poids de la première couche ou série de couches (l'extrait sec du liant liquide représentant par exemple de l'ordre de 3 à 12 % du liant liquide) et le taux de liant sous forme de poudre déposé le cas échéant sur la deuxième couche ou série de couches représente préférentiellement de 2 à 6 % en poids du poids de l'ensemble des couches déposées.

Le liant, en particulier le liant sous forme liquide, non retenu par le mat peut être recyclé et réutilisé dans le procédé selon l'invention, sa composition étant réajustée par l'addition d'un complément liquide ou solide avant dépôt sur de nouveaux fils ou de nouvelles portions de fils dans le procédé selon l'invention.

La structure fibreuse obtenue après dépôt de la deuxième couche ou série de couches et après dépôt du liant permettant le liage des couches entre elles, est généralement introduite dans un dispositif permettant ou favorisant la fusion et/ou la polymérisation et/ou la réticulation du liant, par exemple un dispositif de traitement thermique tel qu'une étuve ou par exemple, selon le choix du liant, un dispositif d'irradiation tel qu'une source de rayonnements ultraviolets. Le cas échéant, la nappe de fils obtenue après dépôt de la deuxième couche ou série de couches peut avoir été traitée préalablement pour enlever l'excédent d'eau se trouvant sur les fils, par exemple peut avoir été séchée par passage dans une première étuve, avant dépôt, le cas échéant, de liant sous forme de poudre et avant passage, par exemple, dans une deuxième étuve pour la fusion et/ou polymérisation et/ou réticulation du liant. Ce séchage permet le cas échéant de fixer les composants actifs du liant liquide déposé et/ou permet une meilleure introduction du liant sous forme de poudre à l'intérieur des couches de fils. Il est également possible de pulvériser un fluide tel que de l'eau sur la nappe de fils (c'est-à-dire de légèrement réhumidifier les fils) juste avant et/ou après dépôt de liant sous forme de poudre pour permettre une meilleure fixation de celle-ci sur les fils.

Le mat selon l'invention présente en général une masse surfacique globale d'au moins 150 g/m². Il comprend généralement (ou est constitué de) une ou plusieurs couches (correspondant approximativement à la deuxième couche ou série de couches) présentant une masse surfacique d'au moins 120 g/m² (et de préférence d'au moins 170 g/m², cette masse surfacique pouvant aller jusqu'à 900 ou même 1800 g/m²) et une ou plusieurs couches (correspondant approximativement à la première couche ou série de couches) présentant une masse surfacique d'au moins 20-30 g/m² (et de préférence d'au moins 70 g/m²), cette masse étant généralement inférieure à celle de la ou des autres couches précitée(s) et étant, dans la plupart des cas, inférieure à 150 g/m².

Le mat selon l'invention consiste le plus souvent en une structure fibreuse, généralement enduite d'un liant traité comme précédemment décrit, obtenue selon le procédé de l'invention. Il (ou cette structure fibreuse) comprend au moins une couche de fil(s) de verre ouvert(s) au moins en partie sous forme de filaments et présentant un gradient de dispersion des filaments (ou encore un gradient de surface occupée par les fils ouverts) et au moins une couche de fil(s) de verre intègre(s), c'est-à-dire de fil(s) constitué(s) de filaments solidaires les uns des autres, ce(s) fil(s) présentant généralement une section approximativement ronde, cette dernière couche étant liée à la ou aux autres couches par l'intermédiaire d'un (ou de) liant(s) et ayant conservé (en particulier dans le cas où il s'agit d'une couche de fils continus) son gonflant initial et une bonne porosité du fait qu'elle n'a pas subi de force de compression ou de morcellement au cours du procédé. La présence de cette dernière couche permet également d'obtenir des composites présentant de bonnes propriétés mécaniques. En général, la(les) couche(s) de fil(s) ouvert(s) représente(nt) de 5 à 50 % en poids de la structure fibreuse obtenue selon l'invention (ou du mat) et de préférence représente(nt) de 5 à 20 % (voire, dans la plupart des cas, de 8 à 20 %) de cette structure (ou du mat).

Eventuellement, le mat selon l'invention peut être formé en assemblant, dos à dos, deux structures fibreuses obtenues selon le procédé de l'invention et en les liant par exemple par collage, de façon à présenter une ou plusieurs couches centrales formée(s) de fil(s) de verre intègre(s) et des couches externes présentant chacune un gradient de dispersion des filaments, un tel mat présentant l'avantage d'avoir un bon aspect de surface en ses deux faces.

Les mats selon l'invention présentent, dans le cas des mats de fils continus, un gonflant suffisant par rapport à leur poids de fils pour pouvoir être utilisés en moulage par injection. Par exemple, pour un grammage (ou masse surfacique) de l'ordre de 450 g/m², ils présentent une épaisseur (sous une pression inférieure à 50 g/cm²) d'au moins 1,5 mm, généralement d'au moins 2 mm (contrairement aux mats destinés par exemple aux applications électriques ou à la pultrusion qui présentent au même grammage une épaisseur inférieure à 1 mm). Les mats de fils continus selon l'invention permettent d'obtenir facilement et efficacement des composites et/ou des produits moulés, en particulier par injection, présentant notamment un aspect de surface particulièrement satisfaisant. Les composites obtenus comprennent au moins un mat selon l'invention et au moins une matière organique et/ou inorganique, de préférence au moins une matière organique thermoplastique ou thermodurcissable ou élastomère (tel qu'un polyuréthane).

Bien que le procédé et les mats selon l'invention aient été décrits préférentiellement dans le cas des mats de fils continus, le procédé et les mats selon l'invention sont également particulièrement avantageux dans le cas des mats de fils coupés également couvert par la présente invention. Les mats de fils coupés peuvent être obtenus en procédant comme décrit précédemment pour les fils continus, les fils obtenus par rassemblement des filaments étant cependant coupés par un dispositif de coupe avant leur dépôt ou conjointement à leur dépôt sous forme de couche(s) sur le convoyeur dans le procédé selon l'invention, ces fils étant issus directement de filières et/ou d'extrudeuses, ou pouvant également être issus d'enroulements. Les mats obtenus présentent également deux types de couche(s) comme défini selon l'invention, les avantages obtenus étant notamment une meilleure cohésion dans l'épaisseur du mat, un gain en matière de liant (moins de liant nécessaire à la cohésion et, le cas échéant, moins de pertes de liant du fait des fils ouverts retenant mieux le liant dans la partie inférieure du mat) et un meilleur aspect de surface. Les mats selon l'invention peuvent également combiner à la fois des fils continus et des fils coupés, et les couches de fils utilisées dans le procédé selon l'invention peuvent être en partie des couches de fils continus et en partie des couches de fils coupés.

D'autres avantages et caractéristiques de l'invention seront mis en évidence dans la description suivante en référence aux dessins illustrant des modes de réalisation avantageux de la présente invention, ces modes étant illustratifs mais non limitatifs.

La figure 1 représente schématiquement un premier mode de réalisation de l'invention.

La figure 2 représente schématiquement un second mode de réalisation de l'invention.

La figure 3 représente schématiquement un troisième mode de réalisation de l'invention.

Dans les figures représentées, le sens de défilement de chaque convoyeur est indiqué par une flèche au-dessus du convoyeur.

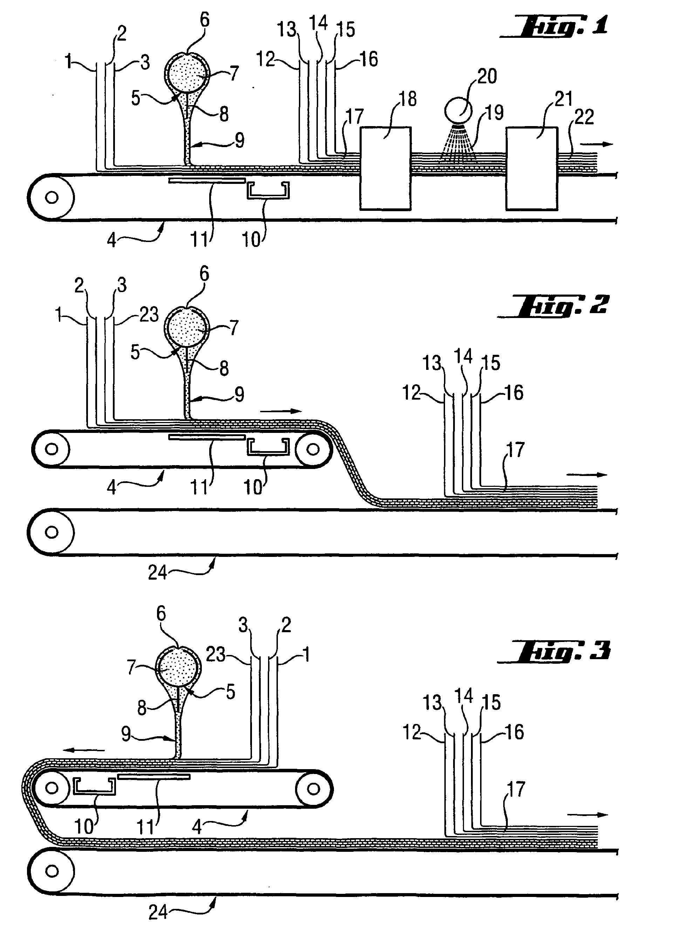

Dans le mode de réalisation illustré en figure 1, une première série de couches (1, 2, 3) de fils, provenant de trois filières ou de trois extrudeuses (non représentées), chaque couche comprenant un ou plusieurs fils et venant recouvrir le(s) fil(s) de la couche précédente, est déposée en continu sur un convoyeur (4) en mouvement. Le matériau constituant la bande de transport du convoyeur peut être par exemple un tissu de fils d'acier. La première série de couches passe sous un dispositif (5) d'ouverture des fils, ce dispositif (sous forme, par exemple, d'un cylindre creux muni d'une paroi verticale à sa base) présentant une ouverture (6) à son sommet permettant l'échappement continu d'un liant liquide (7) alimentant le dispositif en continu, ce liant liquide s'écoulant le long d'une paroi verticale (8) en partie inférieure du dispositif d'ouverture et tombant ainsi sous forme d'un rideau (ou cascade) de liquide (9) sur la première série de couches. Le débit de liant liquide est choisi de façon à permettre l'ouverture des fils et la dispersion recherchée des fils, le liant permettant en même temps de lier entre eux les fils de la première série de couches.

Le liant excédentaire déposé sur le mat et non retenu par celui-ci est éventuellement provisoirement maintenu à la surface du convoyeur de façon à former un bain dans lequel la première série de couches circule et de façon à permettre une meilleure dispersion des filaments constituant les fils après ouverture de ces derniers. Une plaque rigide étanche (11) et éventuellement des parois latérales (non représentées sur les figures) peuvent être utilisées à cet effet pour retenir le liant liquide en excès sur une certaine portion du trajet des couches de fils, puis le liant en excès est évacué, par exemple au travers du convoyeur et éventuellement récupéré puis recyclé à l'aide de dispositif(s) approprié(s) (schématiquement représenté(s) en 10). Si nécessaire, la composition du liant est réajustée avant réintroduction dans le dispositif (5).

Après ouverture des fils et dispersion des filaments les constituant, la première série de couches de fils est recouverte en continu d'une deuxième série de couches de fils (cinq couches 12, 13, 14, 15, 16 étant ici représentées pour des raisons pratiques mais le nombre de couches de la deuxième série étant généralement supérieur) provenant de filières (non représentées). La nappe ou structure fibreuse formée (17) est éventuellement séchée dans une étuve (18) puis est revêtue de liant sous forme de poudre (19) à l'aide d'un ou de plusieurs dispositif(s) approprié(s) (20), cette nappe étant éventuellement légèrement réhumidifiée avant et/ou après dépôt de la poudre pour permette une meilleure fixation de celle-ci. Le liant (liquide et sous forme de poudre) est ensuite traité par exemple dans une étuve (21) de façon à obtenir un mat (22), ce mat pouvant ensuite être collecté et/ou découpé et/ou assemblé avec d'autres mats similaires (opérations non représentées) afin d'obtenir le(s) mats définitif(s). Eventuellement, il est possible de prévoir un dispositif de nettoyage ou lavage (non représenté) de la bande transporteuse du convoyeur (généralement bande sans fin) afin d'enlever le liant éventuellement collé sur le convoyeur, lors du retour de la bande vers les premières étapes du procédé. On peut également utiliser plusieurs convoyeurs successifs au lieu d'un seul convoyeur (4).

Dans le mode de réalisation représenté en figure 2, une première série de couches (1, 2, 3, 23) de fils, provenant de quatre filières ou de quatre extrudeuses (non représentées), chaque couche comprenant un ou plusieurs fils et venant recouvrir le(s) fil(s) de la couche précédente, est déposée en continu sur un premier convoyeur (4) en mouvement. La première série de couches passe sous un dispositif (5) d'ouverture des fils déversant en cascade un liant liquide sur la première série de couches.

Comme dans le premier mode de réalisation, la première série de couches circule dans un bain formé par le liant excédentaire de façon à permettre une meilleure dispersion des filaments constituant les fils après ouverture de ces derniers, ce bain étant délimité par une plaque (11) et éventuellement des parois (non représentées), puis le liant en excès est évacué et éventuellement recyclé à l'aide de dispositif(s) approprié(s) (10) comme dans le premier mode de réalisation.

Après ouverture des fils et dispersion des filaments les constituant, la première série de couches de fils est transférée sur un second convoyeur (24) où elle est recouverte en continu d'une deuxième série de couches de fils (12, 13, 14, 15, 16). La nappe formée (17) est ensuite traitée comme dans le mode de réalisation illustré en figure 1.

Le mode de réalisation représenté en figure 3 est similaire au mode de réalisation représenté en figure 2, excepté que la première série de couches de fils est " retournée " avant introduction sur le second convoyeur. Ainsi, les fils se trouvant en face supérieure de la première série de couches sur le premier convoyeur (4) se retrouvent en face inférieure sur le second convoyeur (24) et les fils se trouvant en face inférieure sur le premier convoyeur (4) se retrouvent en face supérieure sur le second convoyeur (24). Les fils les plus " ouverts " donnant un meilleur aspect de surface se retrouvent ainsi sur une des faces du mat formé.

Les mats obtenus selon l'invention peuvent être utilisés avec avantages dans la réalisation de divers articles composites, en particulier dans la fabrication d'articles moulés par injection (par exemple des pièces automobiles telles que des cabines de camion, etc.) ou par emboutissage...

## Revendications

1. Procédé de fabrication d'un mat selon lequel on dépose sur au moins un convoyeur en mouvement au moins une première couche ou série de couches de fil(s) formé(s) de filaments et au moins une deuxième couche ou série de couches de fil(s) formé(s) de filaments, **caractérisé en ce que** l'on ouvre au moins une partie du(des) fil(s) de la première couche ou série de couches avant superposition de la première couche ou série de couches et de la deuxième couche ou série de couches.

2. Procédé selon la revendication 1 selon lequel les fils sont des fils continus.

3. Procédé selon la revendication 1 selon lequel les fils sont, au moins pour une partie d'entre eux, des fils coupés.

4. Procédé selon l'une des revendications 1 à 3 selon lequel les fils sont formés de filaments de renfort, de préférence de filaments de verre, et/ou de filaments de matière organique.

5. Procédé selon l'une des revendications 1 à 4, **caractérisé en ce que** les fils sont ouverts mécaniquement sous l'action d'une cascade et/ou de jets de fluide arrivant transversalement sur le(s) fil(s) de la première couche ou série de couches disposés sur le convoyeur.

6. Procédé selon l'une des revendications 1 à 5, **caractérisé en ce que** le ou les fils de la première couche ou série de couches, pendant ou après leur ouverture, passent dans un bain favorisant la dispersion des filaments les constituant.

7. Procédé selon l'une des revendications 1 à 6, **caractérisé en ce que** le ou les fils de la première couche ou série de couches sont ouverts par l'intermédiaire d'un fluide comprenant un liant liquide.

8. Procédé selon l'une des revendications 1 à 7, **caractérisé en ce qu'**un liant sous forme de poudre est déversé sur les couches de fil(s) superposées.

9. Procédé selon la revendication 8, **caractérisé en ce que** les fils sont réhumidifiés juste avant et/ou après dépôt de liant sous forme de poudre.

10. Procédé selon l'une des revendications 7 à 9, **caractérisé en ce que** les couches de fil(s) superposées sont introduites dans un dispositif de fusion et/ou de polymérisation et/ou de réticulation du liant.

11. Procédé selon la revendication 10, **caractérisé en ce que** les couches de fil(s) superposées sont séchées avant d'être introduites dans un dispositif de fusion et/ou de polymérisation et/ou de réticulation du liant.

12. Procédé selon l'une des revendications 1 à 11, **caractérisé en ce que** le ou les fils de la première couche ou série de couches sont ouverts sur un premier convoyeur puis sont introduits sur un second convoyeur sur lequel ils sont recouverts par le(s) fil(s) de la deuxième couche ou série de couches.

13. Procédé selon l'une des revendications 1 à 12, **caractérisé en ce que** le ou les fils de la première couche ou série de couches sont retournés avant d'être introduits sur le second convoyeur.

14. Procédé selon l'une des revendications 1 à 13, **caractérisé en ce que** chaque couche de fil(s) provient d'une filière et/ou d'une extrudeuse ou d'enroulement(s).

15. Dispositif de mise en oeuvre du procédé, ce dispositif comprenant :
- un premier dispositif ou ensemble de dispositifs d'alimentation d'une première couche ou série de couches de fil(s) formé(s) de filaments,
- un deuxième dispositif ou ensemble de dispositifs d'alimentation d'une deuxième couche ou série de couches de fil(s) formé(s) de filaments,
- au moins un convoyeur destiné à recevoir la première couche ou série de couches et la deuxième couche ou série de couches,
- et au moins un dispositif d'ouverture de fils situé en aval du premier dispositif ou ensemble de dispositifs d'alimentation et en amont de l'endroit du convoyeur ou se superposent la première couche ou série de couches et la deuxième couche ou série de couches, ce dispositif d'ouverture des fils présentant une ouverture à son sommet permettant l'échappement continu d'un fluide alimentant le dispositif en continu, ce fluide s'écoulant le long d'une paroi verticale à la base du dispositif d'ouverture.

16. Mat obtenu par le procédé tel que défini dans l'une des revendications 1 à 14, ledit mat comprenant une ou plusieurs couche(s) de fil(s) intègre(s) et une ou plusieurs couche(s) de fil(s) ouvert(s) au moins en partie sous forme de filaments.

17. Mat selon la revendication 16, **caractérisé en ce que** la ou les couche(s) de fil(s) ouvert(s) au moins en partie sous forme de filaments présentent un gradient de dispersion des filaments.

18. Mat selon l'une des revendications 16 ou 17, **caractérisé en ce que** les fils sont formés de filaments de renfort, de préférence de filaments de verre, et/ou de filaments de matière organique.

19. Mat selon l'une des revendications 16 à 18, **caractérisé en ce que** les fils sont des fils continus.

20. Composite comprenant au moins une matière organique et/ou une matière inorganique et comprenant au moins des fils de renforts, **caractérisé en ce qu'**il comprend au moins un mat selon l'une des revendications 16 à 19.

## Claims

1. Process for manufacturing a mat whereby at least one first layer or series of layers of strand(s) formed of filaments and at least one second layer or series of layers of strand(s) formed of filaments are deposited on at least one moving conveyor, **characterized in that** at least some of the strand(s) of the first layer or series of layers are opened before the first layer or series of layers and the second layer or series of layers are superposed.

2. Process according to Claim 1, whereby the strands are continuous strands.

3. Process according to Claim 1, whereby the strands are, at least in the case of some of them, chopped strands.

4. Process according to one of Claims 1 to 3, whereby the strands are formed of reinforcing filaments, preferably glass filaments, and/or filaments made of an organic material.

5. Process according to one of Claims 1 to 4, **characterized in that** the strands are opened mechanically under the action of a cascade and/or of jets of fluid arriving transversely on the strand(s) of the first layer or series of layers on the conveyor.

6. Process according to one of Claims 1 to 5, **characterized in that** the strand or strands of the first layer or series of layers, during or after opening, pass through a bath which encourages their constituent filaments to disperse.

7. Process according to one of Claims 1 to 6, **characterized in that** the strand or strands of the first layer or series of layers are opened by a fluid comprising a liquid binder.

8. Process according to one of Claims 1 to 7, **characterized in that** a binder in powder form is poured onto the superposed layers of strand(s).

9. Process according to Claim 8, **characterized in that** the strands are re-humidified just before and/or just after the powder-form binder is deposited.

10. Process according to one of Claims 7 to 9,
**characterized in that** the superposed layers of strand(s) are introduced into a device for melting and/or polymerizing and/or cross-linking the binder.

11. Process according to Claim 10, **characterized in that** the superposed layers of strand(s) are dried before being introduced into a device for melting and/or polymerizing and/or cross-linking the binder.

12. Process according to one of Claims 1 to 11, **characterized in that** the strand or strands of the first layer or series of layers are opened on a first conveyor then introduced onto a second conveyor on which they are covered with the strand(s) of the second layer or series of layers.

13. Process according to one of Claims 1 to 12, **characterized in that** the strand or strands of the first layer or series of layers are turned before being introduced onto the second conveyor.

14. Process according to one of Claims 1 to 13, **characterized in that** each layer of strand(s) comes from a bushing and/or an extruder and/or from (a) winding(s).

15. Device for implementing the process, this device comprising:
- a first device or series of devices for supplying a first layer or series of layers of strand(s) formed of filaments,
- a second device or series of devices for supplying a second layer or series of layers of strand(s) formed of filaments,
- at least one conveyor intended to receive the first layer or series of layers and the second layer or series of layers,
- and at least one device for opening strands which is located downstream of the first supplying device or series of supplying devices and upstream of the point of the conveyor at which the first layer or series of layers and the second layer or series of layers are superposed, this device for opening the strands having an opening at its top allowing the continuous escape of a fluid supplied continuously to the device, this fluid flowing along a vertical wall at the base of the opening device.

16. Mat obtained by the process as defined in one of Claims 1 to 14, said mat comprising one or more layer (layers) of integrated strand(s) and one or more layer (layers) of strand(s) at least partly opened in the form of filaments.

17. Mat according to Claim 16, **characterized in that** the layer or layers of strand(s) at least partly opened in the form of filaments have a filament dispersion gradient.

18. Mat according to one of Claims 16 and 17, **characterized in that** the strands are formed of reinforcing filaments, preferably glass filaments, and/or filaments of an organic material.

19. Mat according to one of Claims 16 to 18, **characterized in that** the strands are continuous strands.

20. Composite comprising at least one organic material and/or one inorganic material and comprising at least reinforcing strands, **characterized in that** it comprises at least one mat according to one of Claims 16 to 19.

## Patentansprüche

1. Verfahren zur Herstellung einer Matte, gemäß welchem auf wenigstens einem sich bewegenden Förderer mindestens eine erste Schicht oder Reihe von Schichten aus einem oder mehreren aus Filamenten gebildeten Fäden und mindestens eine zweite Schicht oder Reihe von Schichten aus einem oder mehreren aus Filamenten gebildeten Fäden abgelegt werden, **dadurch gekennzeichnet, dass** wenigstens ein Teil des Fadens (der Fäden) der ersten Schicht oder Reihe von Schichten vor dem Übereinanderlegen der ersten Schicht oder Schichtreihe und der zweiten Schicht oder Schichtreihe geöffnet wird.

2. Verfahren nach Anspruch 1, gemäß welchem die Fäden endlose Fäden sind.

3. Verfahren nach Anspruch 1, gemäß welchem die Fäden wenigstens teilweise Kurzfäden sind.

4. Verfahren nach einem der Ansprüche 1 bis 3, gemäß welchem die Fäden aus Verstärkungsfilamenten, vorzugsweise Glasfilamenten, und/oder Filamenten aus einem organischen Material gebildet sind.

5. Verfahren nach einem der Ansprüche 1 bis 4, **dadurch gekennzeichnet, dass** die Fäden durch die Einwirkung einer Fluidkaskade und/oder von Fluidstrahlen, die auf den Faden (Fäden) der ersten Schicht oder Schichtreihe, der (die) auf dem Förderer angeordnet ist (sind), quer auftrifft (auftreffen), mechanisch geöffnet werden.

6. Verfahren nach einem der Ansprüche 1 bis 5, **dadurch gekennzeichnet, dass** der Faden (die Fäden) der ersten Schicht oder Schichtreihe während oder nach seiner (ihrer) Öffnung durch ein Bad (läuft) laufen, das die Verteilung der ihn (sie) bildenden Filamente begünstigt.

7. Verfahren nach einem der Ansprüche 1 bis 6, **dadurch gekennzeichnet, dass** der Faden (die Fäden) der ersten Schicht oder Schichtreihe von einem ein flüssiges Bindemittel umfassenden Fluid geöffnet wird (werden).

8. Verfahren nach einem der Ansprüche 1 bis 7, **dadurch gekennzeichnet, dass** ein pulverförmiges Bindemittel auf die übereinander angeordneten Schichten aus einem oder mehreren Fäden geschüttet wird.

9. Verfahren nach Anspruch 8, **dadurch gekennzeichnet, dass** die Fäden unmittelbar vor und/oder nach dem Aufbringen des pulverförmigen Bindemittels wieder angefeuchtet werden.

10. Verfahren nach einem der Ansprüche 7 bis 9, **dadurch gekennzeichnet, dass** die übereinander befindlichen Schichten aus einem oder mehreren Fäden in eine Einrichtung zum Schmelzen und/oder Polymerisieren und/oder Vernetzen des Bindemittels geschickt werden.

11. Verfahren nach Anspruch 10, **dadurch gekennzeichnet, dass** die übereinander befindlichen Schichten aus einem oder mehreren Fäden getrocknet werden, bevor sie in eine Einrichtung zum Schmelzen und/oder Polymerisieren und/oder Vernetzen des Bindemittels geschickt werden.

12. Verfahren nach einem der Ansprüche 1 bis 11, **dadurch gekennzeichnet, dass** der Faden (die Fäden) der ersten Schicht oder Schichtreihe auf einem ersten Förderer geöffnet und anschließend über einen zweiten Förderer geführt wird (werden), auf welchem er (sie) mit dem Faden (den Fäden) der zweiten Schicht oder Schichtreihe bedeckt wird (werden).

13. Verfahren nach einem der Ansprüche 1 bis 12, **dadurch gekennzeichnet, dass** der Faden (die Fäden) der ersten Schicht oder Schichtreihe umgedreht wird (werden), bevor er (sie) auf den zweiten Förderer geschickt wird (werden).

14. Verfahren nach einem der Ansprüche 1 bis 13, **dadurch gekennzeichnet, dass** jede Schicht aus einem oder mehreren Fäden von einer Spinndüse und/oder einem Extruder oder einer oder mehreren Spulen kommt.

15. Vorrichtung zur Durchführung des Verfahrens, die:
- eine erste Einrichtung oder Gruppe von Einrichtungen für das Zuführen einer ersten Schicht oder Reihe von Schichten aus einem oder mehreren aus Filamenten gebildeten Fäden,
- eine zweite Einrichtung oder Gruppe von Einrichtungen für das Zuführen einer zweiten Schicht oder Reihe von Schichten aus einem oder mehreren aus Filamenten gebildeten Fäden,
- mindestens einen Förderer, der vorgesehen ist, die erste Schicht oder Schichtreihe und die zweite Schicht oder Schichtreihe aufzunehmen, und
- mindestens eine Einrichtung zum Öffnen von Fäden, die sich nach der ersten Zuführungseinrichtung oder Gruppe von Zuführungseinrichtungen und vor der Stelle des Förderers, wo die erste Schicht oder Schichtreihe und die zweite Schicht oder Schichtreihe übereinander angeordnet werden, befindet, wobei diese Einrichtung zum Öffnen der Fäden auf ihrem Scheitel eine Öffnung aufweist, die das kontinuierliche Austreten eines Fluids erlaubt, das der Einrichtung kontinuierlich zugeführt wird und entlang einer senkrechten Wand am Boden der Öffnungseinrichtung fließt,
umfasst.

16. Matte, die durch das in einem der Ansprüche 1 bis 14 definierte Verfahren erhalten worden ist und eine oder mehrere Schichten aus einem oder mehreren integrierten Fäden und eine oder mehrere Schichten aus einem oder mehreren Fäden, die wenigstens teilweise in Form von Filamenten offen sind, umfasst.

17. Matte nach Anspruch 16, **dadurch gekennzeichnet, dass** die Schicht(en) aus einem oder mehreren Fäden, die wenigstens teilweise in Form von Filamenten offen sind, einen Dispersionsgradienten der Filamente aufweist (aufweisen).

18. Matte nach Anspruch 16 oder 17, **dadurch gekennzeichnet, dass** die Fäden aus Verstärkungsfilamenten, vorzugsweise Glasfilamenten, und/oder Filamenten aus einem organischen Material gebildet sind.

19. Matte nach einem der Ansprüche 16 bis 18, **dadurch gekennzeichnet, dass** die Fäden endlose Fäden sind.

20. Verbundwerkstoff, der mindestens ein organisches Material und/oder ein anorganisches Material und mindestens Verstärkungsfäden umfasst, **dadurch gekennzeichnet, dass** er wenigstens eine Matte nach einem der Ansprüche 16 bis 19 umfasst.
